# EUROPÄISCHE PATENTSCHRIFT

(11) **EP 3 183 987 B1**
(45) Veröffentlichungstag und Bekanntmachung des Hinweises auf die Patenterteilung: **31.07.2019**
(21) Anmeldenummer: 15202399.0
(22) Anmeldetag: 23.12.2015
(51) Int. Cl.: A45C 5/03, A45C 13/36, A45C 13/04, A45C 5/02, B29C 65/00

(54) **GEPÄCKSTÜCK**
PIECE OF LUGGAGE
BAGAGE

(43) Veröffentlichungstag der Anmeldung: 28.06.2017
(73) Patentinhaber: RIMOWA GmbH, 50829 Köln (DE)
(72) Erfinder: Morszeck, Dieter, 50678 Köln (DE)
(74) Vertreter: dompatent von Kreisler Selting Werner - Partnerschaft von Patent- und Rechtsanwälten mbB

(56) Entgegenhaltungen:
- EP-A2- 0 128 547
- GB-A- 718 979
- US-A- 3 669 228

## Beschreibung

Die Erfindung betrifft ein Gepäckstück nach dem Oberbegriff des Anspruchs 1.

Es sind Gepäckstücke, insbesondere Koffer, bekannt, die einen Gepäckstückkörper aufweisen, der zumindest ein erstes und ein zweites Gepäckstückteil aufweist, wobei das erste und das zweite Gepäckstückteil zueinander verschwenkbar sind, so dass der Gepäckstückkörper geöffnet und geschlossen werden kann.

Zumindest ein erstes und ein zweites Rahmenelement sind vorgesehen, wobei das erste Rahmenelement an einer Kante des ersten Gepäckstückteils angeordnet ist und mit dem Gepäckstückteil über eine erste Klebeverbindung verbunden ist und das zweite Rahmenelement an einer zweiten Kante des zweiten Gepäckstückteils angeordnet ist und mit dem zweiten Gepäckstückteil über eine zweite Klebeverbindung verbunden ist.

Bei einem Gepäckstück besteht grundsätzlich das Problem, dass beim Transport des Gepäckstücks, beispielsweise bei einem Transport mit dem Flugzeug, hohe Kräfte auf das Gepäckstück einwirken, so dass die Gefahr besteht, dass die erste und oder zweite Klebeverbindung zwischen erstem Rahmenelement und Gepäckstückteil und/oder zwischen zweiten Rahmenelement und zweiten Gepäckstückteil gelöst wird.

In der GB 718 979 offenbart einen Koffer mit einem Verstärkungselement am Boden des Koffers und einer Abdeckung, die auf dem Verstärkungselement befestigt ist.

Der Erfindung liegt die Aufgabe zugrunde, eine bessere Haltbarkeit des Gepäckstücks zu schaffen.

Zur Lösung dieser Aufgabe dienen die Merkmale des Anspruchs 1.

Die Erfindung sieht in vorteilhafter Weise vor, dass zumindest ein erstes Profilelement auf einer Innenseite des Gepäckstückkörpers mit dem Gepäckstückteil und zumindest ein zweites Profilelement auf der Innenseite des Gepäckstückkörpers mit dem zweiten Gepäckstückteil verbunden ist, wobei das erste Profilelement das Rahmenelement und das zweite Profilelement das zweite Rahmenelement zumindest teilweise überlappt, so dass ein Ablösen der ersten Klebeverbindung zwischen erstem Rahmenelement und erstem Gepäckstückteil und der zweiten Klebeverbindung zwischen zweitem Rahmenelement und zweitem Gepäckstückteil entgegengewirkt ist. Das erste Rahmenelement ist ein um die Kante des ersten Gepäckstückteils umlaufendes Rahmenelement und das zweite Rahmenelement ist ein um die Kante des zweiten Gepäckstückteils umlaufendes Rahmenelement.

Die vorliegende Erfindung hat den Vorteil, dass die Verbindung zwischen erstem Rahmenelement und erstem Gepäckstückteil und zweitem Rahmenelement und zweitem Gepäckstückteil verbessert wird. Ferner ist das erste und zweite Profilelement jeweils auf der Innenseite des Gepäckstückkörpers angeordnet. Dies bedeutet, dass die Verstärkung von außen nicht sichtbar ist. Auf diese Weise können auch Nieten oder Schrauben, die als zusätzliche Verbindungen zwischen Rahmenelement und Gepäckstückteil vorgesehen sein können, vermieden werden.

Das erste Profilelement kann das erste Rahmenelement und das zweite Profilelement das zweite Rahmenelement zumindest teilweise umgreifen.

Das erste Profilelement kann zumindest teilweise bei dem ersten Rahmenelement und das zweite Profilelement kann zumindest teilweise bei dem zweiten Rahmenelement einhaken.

Das erste Rahmenelement kann eine erste Rippe aufweisen und das zweite Rahmenelement kann eine zweite Rippe aufweisen, wobei das erste Profilelement die erste Rippe und das zweite Profilelement die zweite Rippe überlappt.

Das erste Profilelement kann mit dem ersten Gepäckstückteil und das zweite Profilelement kann mit dem zweiten Gepäckstückteil verklebt sein. Auf diese Weise ist die Verbindung zwischen Profilelement und Gepäckstückteil von außen nicht sichtbar.

Das erste und das zweite Rahmenelement können aus einem Material bestehen, das Metall aufweist.

Das erste und das zweite Profilelement können aus einem Material bestehen, das Kunststoff aufweist.

Das erste und das zweite Gepäckstückteil können aus einem Material bestehen, das Kunststoff aufweist.

Das erste und das zweite Rahmenelement können aus einem ersten Material bestehen und das erste und zweite Profilelement sowie das erste und das zweite Gepäckstückteil können aus einem zweiten Material bestehen.

Dadurch, dass das erste und das zweite Profilelement, das aus demselben Material bestehen können, wie das erste und zweite Gepäckstückteil, ist eine Klebeverbindung zwischen erstem Profilelement und erstem Gepäckstückteil und zweitem Profilelement und zweitem Gepäckstückteil besonders gut.

Das erste Rahmenelement kann eine erste Nut aufweisen, wobei ein Steg der ersten Nut die erste Rippe darstellt, und wobei das zweite Rahmenelement eine zweite Nut aufweisen kann, wobei ein Steg der zweiten Nut die zweite Rippe darstellt. Die Nut kann bei einem umlaufenden Rahmenelement ebenfalls eine umlaufende Nut sein.

Das erste Rahmenelement und das zweite Rahmenelement können im geschlossenen Zustand des Gepäckstückkörpers ineinander greifen.

Im geschlossenen Zustand kann ein Dichtungselement zwischen erstem Rahmenelement und zweitem Rahmenelement angeordnet sein.

Im Folgenden wird unter Bezugnahme auf die Zeichnungen ein Ausführungsbeispiel der Erfindung näher erläutert.

Es zeigen schematisch:
- Fig. 1: ein Gepäckstück gemäß der vorliegenden Erfindung,
- Fig. 2: ein Ausschnitt auf eine Ansicht von der Innenseite des Gepäckstücks aus Fig. 1,
- Fig. 3: eine Schnittansicht aus Fig. 2,
- Fig. 4: lediglich das erste Gepäckstückteil mit erstem Rahmenelement und erstem Profilelement.

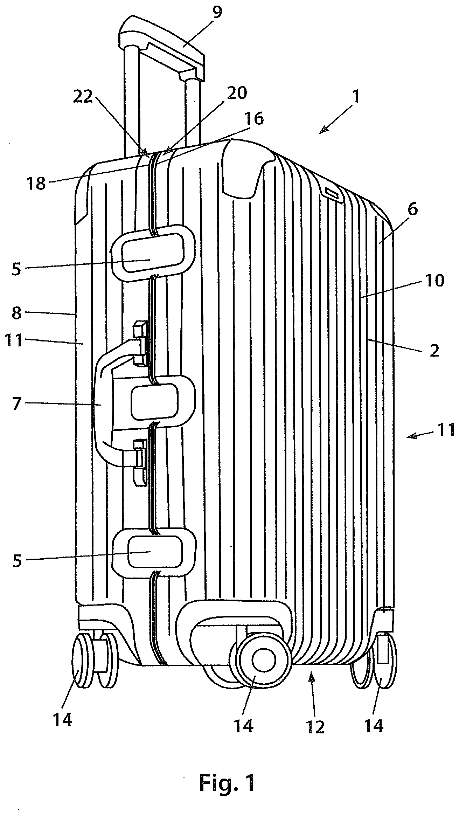

Fig. 1 zeigt ein Gepäckstück 1. In dem dargestellten Ausführungsbeispiel ist das Gepäckstück 1 vorzugsweise ein Koffer. Das Gepäckstück 1 weist ein Gepäckstückkörper 2 auf, der wiederum zumindest ein erstes und ein zweites Gepäckstückteil 6, 8 aufweist. Das erste und das zweite Gepäckstückteil 6, 8 sind zueinander verschwenkbar, so dass der Gepäckstückkörper 2 geöffnet oder geschlossen werden kann. Dafür sind vorzugsweise Scharniere vorgesehen, die im dargestellten Ausführungsbeispiel nicht dargestellt sind. Ferner kann das Gepäckstück 1 Schlösser 5 zum Verschließen des Gepäckstückkörpers im geschlossenen Zustand aufweisen. Auch kann ein Handgriff 7 und ein Trolleygriff 9 vorgesehen sein.

Das Gepäckstück 1 weist vorzugsweise zwei Hauptflächen 10, zwei Längsseiten 11, eine Oberseite 4 und eine Unterseite 12 auf. Das Gepäckstück 1 weist ferner vorzugsweise Rollen 14 auf, mit dem das Gepäckstück 1 über einen Boden rollbar ist.

Das Gepäckstück 1 weist ferner ein erstes und ein zweites Rahmenelement 16, 18 auf, wobei das erstes Rahmenelement 16 an einer Kante 20 des ersten Gepäckstückteils 6 angeordnet ist und über eine erste Klebeverbindung 60 mit dem ersten Gepäckstückteil 6 verbunden ist. Das zweite Rahmenelement 18 ist an einer Kante 22 des zweiten Gepäckstückteils 8 angeordnet und mit dem zweiten Gepäckstückteil 8 über eine zweite Klebeverbindung 62 verbunden.

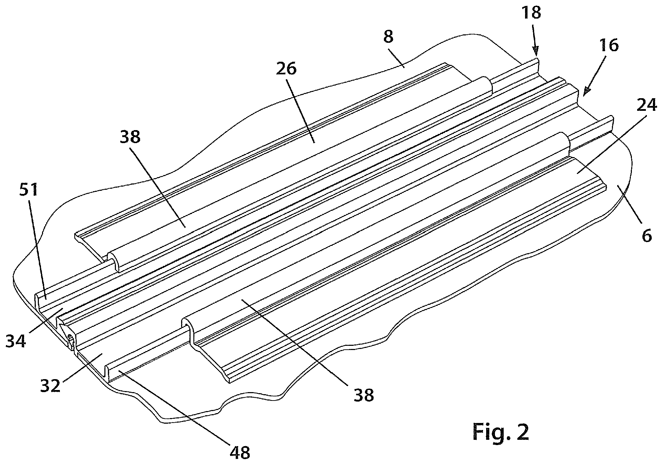

In Fig. 2 ist eine Ansicht auf einen Ausschnitt auf eine Innenseite 15 des Gepäckstückkörpers 2 dargestellt. Dabei ist zu sehen, dass das erste Rahmenelement 16 und das zweite Rahmenelement 18 jeweils an der Kante 20 bzw. an der Kante 22 des ersten bzw. des zweiten Gepäckstückteils 6, 8 vorbeilaufen. Es ist zumindest ein erstes Profilelement 24 der Innenseite des Gepäckstückköpers 2 mit dem ersten Gepäckstückteil 6 und zumindest ein zweites Profilelement 26 auf der Innenseite 50 des Gepäckstückköpers 2 mit dem zweiten Gepäckstückteil 8 verbunden.

Das erste Profilelement 24 überlappt dabei zumindest teilweise das erste Rahmenelement 16 und das zweite Profilelement 26 überlappt zumindest teilweise das zweite Rahmenelement 18, so dass ein Ablösen der ersten und zweiten Klebeverbindung 60, 62 entgegengewirkt ist. Dadurch, dass erste Profilelement 24 direkt angrenzend an das erste Rahmenelement 16 und das zweite Profilelement 26 direkt angrenzend an das zweite Rahmenelement 18 angeordnet ist, ist zumindest jeweils ein Außenbereich des ersten und zweiten Profilelementes 24, 26 überdeckt, so dass eine Ablösung der ersten und zweiten Klebeverbindung 60, 62 vermieden werden kann. Ferner wirkt durch das Überlappen des ersten Profilelementes 24 über das erste Rahmenelement 16 und des zweiten Profilelementes 26 über das zweite Rahmenelement 18 jeweils eine Kraft auf das erste und zweite Rahmenelement 16, 18, die einer Ablösung der ersten und zweiten Klebeverbindung 60, 62 entgegenwirkt.

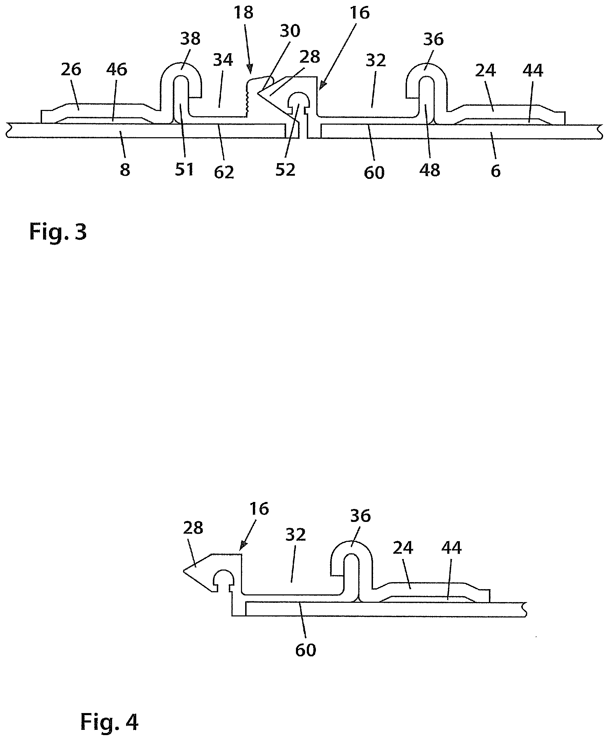

In Fig. 3 ist eine Schnittansicht der Fig. 2 dargestellt. Aus Fig. 3 kann entnommen werden, dass im dargestellten Ausführungsbeispiel ein Teil 36 des ersten Profilelementes 24 das erste Rahmenelement 32 zumindest teilweise umgreift, vorzugsweise sogar einhakt. Auch das zweite Profilelement 26 kann, wie im dargestellten Ausführungsbeispiel dargestellt, mit einem Teil 38 das zweite Rahmenelement 18 teilweise umgreifen und vorzugsweise bei dem zweiten Profilelement 18 einhaken.

Das erste Rahmenelement 16 kann, wie im dargestellten Ausführungsbeispiel gezeigt, eine Nut 32 aufweisen. Ferner weist das erste Profilelement 16 eine Rippe 48 auf, wobei die Rippe 48 durch einen Steg der Nut 32 gebildet ist. Das Teil 36 des ersten Profilelementes 24 überlappt die Rippe 48. Auch das zweite Rahmenelement 18 kann eine Nut 34 aufweisen. Ferner weist das zweite Rahmenelement 18 eine Rippe 51 auf, die von dem Teil 38 des zweiten Profilelementes 26 überlappt ist. Die Rippe 51 kann, wie dargestellt, durch den Steg der Nut 34 gebildet werden.

Aus Fig. 3 geht ferner hervor, dass zwischen erstem Rahmenelement 16 und erstem Gepäckstückteil 6 eine erste Klebeverbindung 60 angeordnet ist, die das erste Rahmenelement 16 mit dem ersten Gepäckstückteil 6 verbindet. Auch kann zwischen zweitem Rahmenelement 18 und zweitem Gepäckstückteil 8 eine Klebeverbindung 62 zum Verbinden des zweiten Rahmenelements 18 mit dem zweiten Gepäckstückteil 8 vorgesehen sein.

Das Profilelement 24 ist vorzugsweise über eine Klebeschicht 44 mit dem ersten Gepäckstückteil 6 verbunden. Auch das zweite Profilelement 26 kann vorzugsweise mittels einer Klebeschicht 42 mit dem zweiten Gepäckstückteil 8 verbunden sein.

Im geschlossenen Zustand, wie in Fig. 3 dargestellt, greift ein vorstehendes Teil 28 des ersten Rahmenelements 16 in eine Vertiefung 30 des zweiten Rahmenelements 18 ein. Ferner kann in der ersten und/oder zweiten Rahmenelement 16, 18 eine weitere Vertiefung 52 für ein Dichtungselement vorgesehen sein. In der Vertiefung 52 kann das Dichtungselement vorgesehen sein. Allerdings ist im dargestellten Ausführungsbeispiel kein Dichtungselement gezeigt.

In Fig. 4 ist lediglich das Gepäckstückteil 6 mit erstem Rahmenelement 16 und erstem Profilelement 24 dargestellt.

## Patentansprüche

1. Gepäckstück (1), mit
- einem Gepäckstückkörper (2), der zumindest ein erstes und ein zweites Gepäckstückteil (6, 8) aufweist, wobei das erste und das zweite Gepäckstückteil (6, 8) zueinander verschwenkbar sind, so dass der Gepäckstückkörper (2) geöffnet oder geschlossen werden kann,
- zumindest einem ersten und einem zweiten Rahmenelement (16,18), wobei das erste Rahmenelement (16) an einer Kante (20) des ersten Gepäckstückteils (6) angeordnet ist und mit dem ersten Gepäckstückteil (6) über eine erste Klebeverbindung (60) verbunden ist und das zweite Rahmenelement (18) an einer Kante (22) des zweiten Gepäckstückteils (8) angeordnet ist und mit dem zweiten Gepäckstückteil über eine zweite Klebeverbindung (62) verbunden ist,
**dadurch gekennzeichnet,**
**dass** zumindest ein erstes Profilelement (24) auf einer Innenseite des Gepäckstückkörpers (2) mit dem ersten Gepäckstückteil (6) und zumindest ein zweites Profilelement (26) auf der Innenseite des Gepäckstücckörpers (2) mit dem zweiten Gepäckstückteil (8) verbunden ist, wobei
das erste Profilelement (24) das erste Rahmenelement (16) und das zweite Profilelement (26) das zweite Rahmenelement (18) zumindest teilweise überlappt, so dass einem Ablösen der ersten Klebeverbindung (60) zwischen erstem Rahmenelement (16) und erstem Gepäckstückteil (6) und der zweiten Klebeverbindung (62) zwischen zweitem Rahmenelement (18) und zweitem Gepäckstückteil (8) entgegengewirkt ist, wobei das erste Rahmenelement (6) ein um die Kante (20) des ersten Gepäckstückteils (6) umlaufendes Rahmenelement ist und das zweite Rahmenelement (18) ein um die Kante (22) des zweiten Gepäckstückteils (8) umlaufendes Rahmenelement ist.

2. Gepäckstück (1) nach Anspruch 1, **dadurch gekennzeichnet, dass** das erste Profilelement (24) das erste Rahmenelement (16) und das zweite Profilelement (26) das zweite Rahmenelement (18) zumindest teilweise umgreift.

3. Gepäckstück (1) nach Anspruch 1 oder 2, **dadurch gekennzeichnet, dass** das erste Profilelement (24) zumindest teilweise bei dem ersten Rahmenelement (16) und das zweite Profilelement (26) zumindest teilweise bei dem zweiten Rahmenelement (18) einhakt.

4. Gepäckstück (1) nach einem der Ansprüche 1 bis 3, **dadurch gekennzeichnet, dass** das erste Rahmenelement (16) eine erste Rippe (48) aufweist und das zweite Rahmenelement (18) eine zweite Rippe (51) aufweist, wobei das erste Profilelement (24) die erste Rippe (48) und das zweite Profilelement (26) die zweite Rippe (51) überlappt.

5. Gepäckstück (1) nach einem der Ansprüche 1 bis 4, **dadurch gekennzeichnet, dass** das erste Profilelement (24) mit dem ersten Gepäckstückteil (6) und das zweite Profilelement (26) mit dem zweiten Gepäckstückteil (8) verklebt ist.

6. Gepäckstück (1) nach einem der Ansprüche 1 bis 5, **dadurch gekennzeichnet, dass** das erste und das zweite Rahmenelement (16,18) aus einem Material bestehen, das Metall aufweist.

7. Gepäckstück (1) nach einem der Ansprüche 1 bis 6, **dadurch gekennzeichnet, dass** das erste und das zweite Profilelement (24,26) aus einem Material bestehen, das Kunststoff aufweist.

8. Gepäckstück (1) nach einem der Ansprüche 1 bis 7, **dadurch gekennzeichnet, dass** das erste und das zweite Gepäckstückteil (6, 8) aus einem Material bestehen, das Kunststoff aufweist.

9. Gepäckstück nach einem der Ansprüche 1 bis 8, **dadurch gekennzeichnet, dass** das erste und das zweite Rahmenelement (16,18) aus einem ersten Material bestehen und das erste und das zweite Profilelement (24,26) sowie das erste und das zweite Gepäckstückteil (6, 8) aus einem zweiten Material bestehen.

10. Gepäckstück (1) nach Anspruch 4, **dadurch gekennzeichnet, dass** das erste Rahmenelement (16) eine erste Nut (32) aufweist, wobei ein Steg der ersten Nut (22) die erste Rippe (48) darstellt und wobei das zweite Rahmenelement (18) eine zweite Nut (34) aufweist, wobei ein Steg (51) der zweiten Nut (34) die zweite Rippe (51) darstellt.

11. Gepäckstück (1) nach einem der Ansprüche 1 bis 8, **dadurch gekennzeichnet, dass** das erste Rahmenelement (16) und das zweite Rahmenelement (18) im geschlossenen Zustand des Gepäckstückkörpers (2) ineinander greifen.

## Claims

1. Luggage item (1) comprising
- a luggage item body (2) having at least one first and one second luggage item portion (6,8), wherein the first and the second luggage item portion (6,8) are pivotable relative to each other so that the luggage item body (2) can be opened or closed,
- at least one first and one second frame element (16,18), wherein the first frame element (16) is arranged at an edge (20) of the first luggage item portion (6) and is connected to the first luggage item portion (6) via a first bonding connection (60), and the second frame element (18) is arranged at an edge (22) of the second luggage item portion (8) and is connected to the second luggage item portion via a second bonding connection (62),
**characterized in**
**that** at least a first profile element (24) is connected on an inner side of the luggage item body (2) to the first luggage item portion (6), and that at least a second profile element (26) is connected on the inner side of the luggage item body (2) to the second luggage item portion (8), wherein the first profile element (24) at least partially overlaps the first frame element (16) and the second profile element (26) at least partially overlaps the second frame element (18), thus counteracting to a detachment of the first bonding connection (60) between the first frame element (16) and the first luggage item portion (6) and of the second bonding connection (62) between the second frame element (18) and the second luggage item portion (8), wherein the first frame element (16) is a frame element wound around the edge (20) of the first luggage item portion (6) and the second frame element (18) is a frame element wound around the edge (22) of the first luggage item portion (8).

2. Luggage item (1) according to claim 1, **characterized in that** the first profile element (24) at least partially grips around the first frame element (16) and the second profile element (26) at least partially grips around the second frame element (18).

3. Luggage item (1) according to claim 1 or 2, **characterized in that** the first profile element (24) is at least partially hooked in the first frame element (16) and the second profile element (26) is at least partially hooked in the second frame element (18).

4. Luggage item (1) according to any one of claims 1 to 3, **characterized in that** the first frame element (16) comprises a first rib (48) and the second frame element (18) comprises a second rib (51), wherein the first profile element (24) overlaps the first rib (48) and the second profile element (26) overlaps the second rib (51).

5. Luggage item (1) according to any one of claims 1 to 4, **characterized in that** the first profile element (24) is bonded to the first luggage item portion (6) and the second profile element (26) is bonded to the second luggage item portion (8).

6. Luggage item (1) according to any one of claims 1 to 5, **characterized in that** the first and the second frame element (16,18) consist of a material comprising metal.

7. Luggage item (1) according to any one of claims 1 to 6, **characterized in that** the first and the second profile element (24,26) consist of a material comprising plastic.

8. Luggage item (1) according to any one of claims 1 to 7, **characterized in that** the first and the second luggage item portion (6,8) consist of a material comprising plastic.

9. Luggage item (1) according to any one of claims 1 to 8, **characterized in that** the first and the second frame element (16,18) consist of a first material, and the first and the second profile element (24,26) and the first and the second luggage item portion (6,8) consist of a second material.

10. Luggage item (1) according to claim 4, **characterized in that** the first frame element (16) comprises a first groove (32), wherein a web of the first groove (32) is the first rib (48) and that the second frame element (18) comprises a second groove (34), wherein a web (51) of the second groove (34) is the second rib (51).

11. Luggage item (1) according to any one of claims 1 to 8, **characterized in that**, in the closed state of the luggage item body (2), the first frame element (16) and the second frame element (18) are in mutual engagement.

## Revendications

1. Bagage (1) comprenant
- un corps de bagage (2) qui comporte au moins une première et une deuxième partie de bagage (6, 8), les première et deuxième parties de bagage (6, 8) pouvant pivoter l'une par rapport à l'autre de manière à pouvoir ouvrir ou fermer le corps de bagage (2),
- au moins un premier et un deuxième élément de cadre (16, 18), le premier élément de cadre (16) étant disposé sur un bord (20) de la première partie de bagage (6) et étant relié à la première partie de bagage (6) par une première liaison adhésive (60) et le deuxième élément de cadre (18) étant disposé sur un bord (22) de la deuxième partie de bagage (8) et étant relié à la deuxième partie de bagage par une deuxième liaison adhésive (62),
**caractérisé en ce que**
au moins un premier élément profilé (24) est relié sur un côté intérieur du corps de bagage (2) à la première partie de bagage (6) et au moins un deuxième élément profilé (26) est relié du côté intérieur du corps de bagage (2) à la deuxième partie de bagage (8), le premier élément profilé (24) recouvrant au moins partiellement le premier élément de cadre (16) et le deuxième élément profilé (26) recouvrant au moins partiellement le deuxième élément de cadre (18) de manière à empêcher le détachement de la première liaison adhésive (60) entre le premier élément de cadre (16) et la première partie de bagage (6) et de la deuxième liaison adhésive (62) entre le deuxième élément de cadre (18) et la deuxième partie de bagage (8), le premier élément de cadre (16) étant un élément de cadre qui court autour du bord (20) de la première partie de bagage (6) et le deuxième élément de cadre (18) étant un élément de cadre qui court autour du bord (22) de la deuxième partie de bagage (8).

2. Bagage (1) selon la revendication 1, **caractérisé en ce que** le premier élément profilé (24), le premier élément de cadre (16) et le deuxième élément profilé (26) s'engagent au moins partiellement autour du deuxième élément de cadre (18) .

3. Bagage (1) selon la revendication 1 ou 2, **caractérisé en ce que** le premier élément profilé (24) s'accroche au moins partiellement dans le premier élément de cadre (16) et le deuxième élément profilé (26) s'accroche au moins partiellement dans le deuxième élément de cadre (18).

4. Bagage (1) selon l'une des revendications 1 à 3, **caractérisé en ce que** le premier élément de cadre (16) comporte une première nervure (48) et le deuxième élément de cadre (18) comporte une deuxième nervure (51), le premier élément profilé (24) recouvrant la première nervure (48) et le deuxième élément profilé (26) recouvrant la deuxième nervure (51).

5. Bagage (1) selon l'une des revendications 1 à 4, **caractérisé en ce que** le premier élément profilé (24) est collé à la première partie de bagage (6) et le deuxième élément profilé (26) est collé à la deuxième partie de bagage (8).

6. Bagage (1) selon l'une des revendications 1 à 5, **caractérisé en ce que** les premier et deuxième éléments de cadre (16,18) sont en un matériau comportant du métal.

7. Bagage (1) selon l'une des revendications 1 à 6, **caractérisé en ce que** les premier et deuxième éléments profilés (24, 26) sont en un matériau comportant de la matière synthétique.

8. Bagage (1) selon l'une des revendications 1 à 7, **caractérisé en ce que** les première et deuxième parties de bagage (6, 8) sont en un matériau comportant de la matière synthétique.

9. Bagage selon l'une des revendications 1 à 8, **caractérisé en ce que** les premier et deuxième éléments de cadre (16, 18) sont en un premier matériau et les premier et deuxième éléments profilés (24, 26) ainsi que les première et deuxième partie de bagage (6, 8) sont en un deuxième matériau.

10. Bagage (1) selon la revendication 4, **caractérisé en ce que** le premier élément de cadre (16) comporte une première gorge (32), une nervure de la première gorge (32) représentant la première nervure (48) et le deuxième élément de cadre (18) comportant une deuxième gorge (34), une nervure (51) de la deuxième gorge (34) représentant la deuxième nervure (51).

11. Bagage (1) selon l'une des revendications 1 à 8, **caractérisé en ce que** le premier élément de cadre (16) et le deuxième élément de cadre (18) s'engagent l'un dans l'autre lorsque le corps de bagage (2) est fermé.
